# EUROPEAN PATENT SPECIFICATION

(11) **EP 3 470 765 B1**
(45) Date of publication and mention of the grant of the patent: **24.02.2021**
(21) Application number: 18199417.9
(22) Date of filing: 09.10.2018
(51) Int. Cl.: F28F 21/06

(54) **FUNCTIONALLY GRADED COMPOSITE POLYMER FOR HEAT EXCHANGER**
FUNKTIONELL ABGESTUFTES VERBUNDPOLYMER FÜR WÄRMETAUSCHER
POLYMÈRE COMPOSITE À GRADIENT FONCTIONNEL POUR ÉCHANGEUR DE CHALEUR

(30) Priority: 09.10.2017 US 201715727967
(43) Date of publication of application: 17.04.2019
(60) Divisional application: 20206955.5
(73) Proprietor: Hamilton Sundstrand Corporation, Charlotte, NC 28217-4578 (US)
(72) Inventor: ALAHYARI, Abbas A., Glastonbury, CT Connecticut 06033 (US); PEARSON, Matthew R., Hartford, CT Connecticut 06103 (US); THIBAUD, Catherine, South Windsor, CT Connecticut 06074 (US)
(74) Representative: Dehns

(56) References cited:
- EP-A1- 3 109 037
- US-A- 6 037 066
- US-A- 6 057 406
- US-A1- 2014 272 119
- "Method for manufacturing plastic tubes for heat exchangers containing graphite fillers", METHOD FOR MANUFACTURING PLASTIC TUBES FOR HEAT EXCHANGERS CONTAINING GRAPHITE FILLERS, PRIOR ART PUBLISHING GMBH , 1 January 2014 (2014-01-01), XP008180668, DOI: 10.4421/PAPDEOTT002961 Retrieved from the Internet: URL:www.priorartregister.com

## Description

### BACKGROUND

This application relates generally to heat exchangers, and specifically to polymer heat exchangers. *In particular, it relates to a heat exchanger as defined in the preamble of claim 1 and as disclosed in* EP 3 109 037*.*

Heating, ventilation, and air conditioning (HVAC) residential and rooftop systems typically use round tube plate fin (RTPF) or microchannel (MCHX) heat exchangers. These types of heat exchangers are not suitable for low Global Warming Potential (GWP), low pressure refrigerants, due to heat exchanger size and pressure drop constraints of these types of refrigerants. Also, the weight associated with metallic heat exchangers is a key concern in transport and aerospace applications. Polymers can be used to make heat exchangers that mitigate these shortcomings; however, polymer materials typically have low thermal conductivity.

### SUMMARY

In one embodiment, a heat exchanger includes a plurality of polymer tubes, each of the plurality of polymer tubes comprised of a functionally graded polymer composite, the functionally graded polymer composite comprising a polymer, and at least one filler material.

[deleted].

In another embodiment, a method of making a heat exchanger includes creating functionally graded polymer plates comprising a polymer composite, and assembling the heat exchanger with the polymer plates.

### BRIEF DESCRIPTION OF THE DRAWINGS

FIGS. 1A-E are perspective views of a heat exchanger and heat exchanger components.
FIG. 2 is a cross-sectional view of a wall in the heat exchanger with a functionally graded polymer.
FIG. 3 is a flow chart depicting a method of making a functionally graded composite polymer heat exchanger.

### DETAILED DESCRIPTION

Using polymers to make heat exchangers results in more versatile heat exchangers, but present unique challenges not presented by other materials. For instance, polymers are not thermally conductive. Filler materials can be mixed into polymer to increase the thermal conductivity, but the resulting polymer mixture's mechanical strength and permeability can be affected by the amount and type of filler used. Different parts or areas of heat exchangers have different thermal conductivity, permeability, and mechanical strength requirements. Thus, creating functionally graded composite polymers tailored to specific parts of heat exchangers addresses these varying needs.

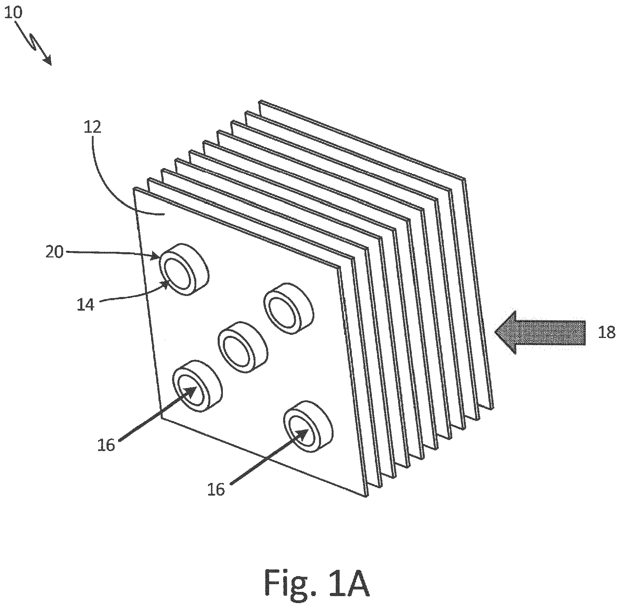

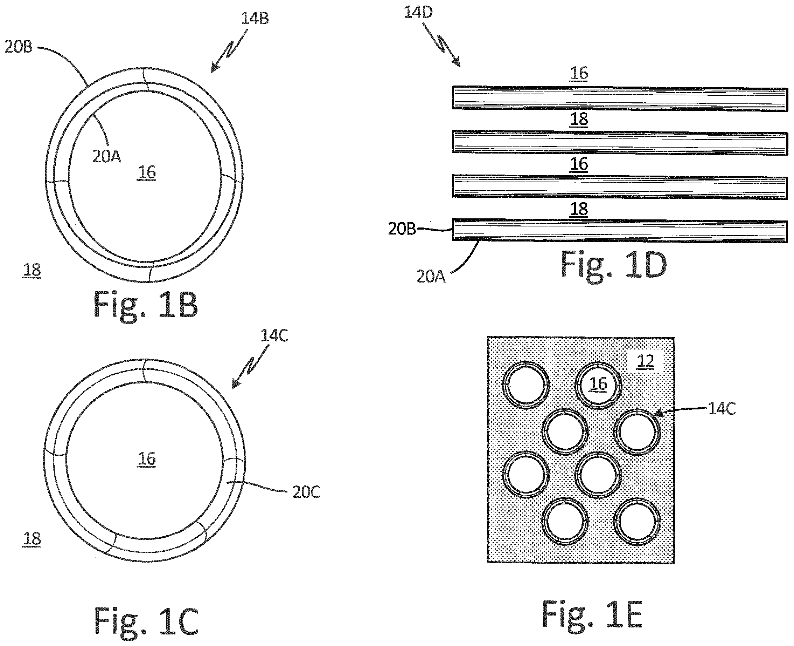

FIG. 1A is a perspective view of heat exchanger 10. Heat exchanger 10 is a low cost, high efficiency polymer liquid-gas heat exchanger that employs a functionally graded polymer composite. Heat exchanger 10 includes plates 12 and tubes 14. Streams 16 and 18 flow through heat exchanger 10. Plates 12, wall 20 of tubes 14, or both can be made of the functionally graded polymer composite. FIGS. 1B-1E are schematic diagrams that depict variations of plates 12 and tubes 14, where each variations has a different functionally graded polymer composite application.

Heat exchanger 10 can be a plate-and-frame heat exchanger, a shell-and-tube heat exchanger, or other appropriate heat exchanger configurations. For example, a plate-and-frame heat exchanger can be used for liquid/liquid or liquid/2-phase heat exchange purposes, has reduced weight, and can be used in a variety of applications, including commercial HVAC chillers, aerospace, and process industry applications. Likewise, a shell and tube heat exchanger, for example, can be used with liquid/liquid or liquid/2-phase heat exchange purposes, and applied in chiller, industrial, food and beverage, or marine applications among others.

In heat exchanger 10 of FIG. 1A, plates 12 run parallel to each other, while tubes 14 extend through polymer plates 12, and allow stream 16 to pass through heat exchanger 10. Stream 18 passes through polymer plates 12. Streams 16 and 18 allow for temperature regulation of fluid running through heat exchanger 10.

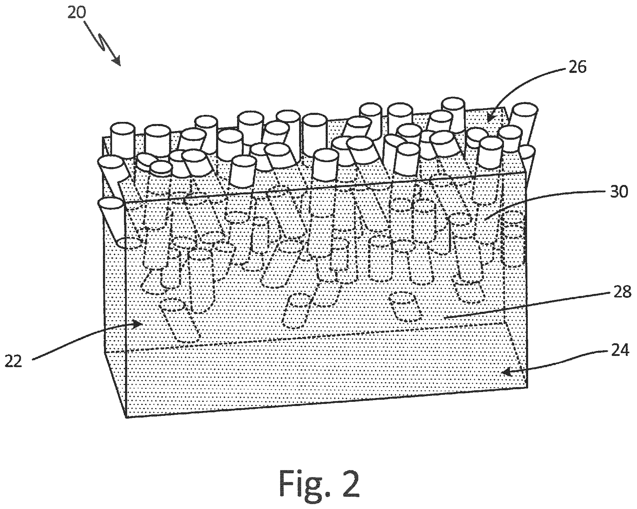

In one embodiment, plates 12 are made of a functionally grade polymer composite comprised of a polymer and a filler material. In this embodiment, tubes 14 can be made of a metallic material, or also made of a polymer material. In this embodiment, the polymer composite filler content is varied from high to low within plates 12 of heat exchanger 10, depending on heating and structure needs. The functionally graded polymer composite is described in more detail with reference to FIG. 2.

In another embodiment, walls 20 of tubes 14 are comprised of the functionally graded polymer composite material. In FIGS. 1B-1E, varying versions of tubes 14 made of polymer composite are depicted. FIG. 1B shows a close view of tube 14B from heater 10, through which fluid stream 16 flows and fluid stream 18 flows around. Tube 14 in FIG. 1B has walls 20A and 20B. In tube 14B, wall 20A has a higher fill content than wall 20B. Though both walls 20A and 20B are made of the polymer composite material, wall 20A has a higher concentration of filler material, while wall 20B has a higher concentration of polymer. Likewise, in FIG. 1C, wall 20C is functionally graded so that external surfaces of wall 20C (facing both fluid stream 16 and fluid stream 18) have a higher concentration of filler material, while the center of wall 20C has a lower concentration of filler material.

FIG. 1D shows a side view of walls in tubes 14, where wall section 20 contains sections 20A with high filler content on external surfaces of tubes 14, and sections 20B will low filler content inside tubes 14. FIG. IE shows a view of tubes 14 with functionally graded polymer walls in a plate 12.

FIG. 2 is a cross-sectional view of wall 20 in heat exchanger 10 with functionally graded polymer composite 22. Alternative embodiments of wall 20 are discussed with reference to FIGS. 1B-1E. Wall 20 has first side 24 and second side 26. Functionally graded polymer composite 22 contains polymer 28 and filler 30. The content of filler 30 in polymer composite 22 is varied from low to high across first side 24 to second side 26.

Polymer composite 22 is graded in both axial and radial directions in wall 20. This balances conflicting needs: areas with higher filler 30 content in polymer composite 22 generally have improved thermal conductivity at the expense of mechanical strength and increased porosity. In contrast, areas with lower filler 30 content in polymer composite 22 generally have higher mechanical strength and lower thermal conductivity.

Polymer 28 can be a rigid thermoplastic polymer, an elastomeric polymer, or any other suitable polymer. Examples of suitable rigid thermoplastic polymers include polypropylene, polyamides such as nylon 6, nylon 6/6, nylon 6/12, nylon 11, or nylon 12, polyphthalamide, polyphenylene sulfide, liquid crystal polymers, polyethylene, polyether ether ether ketone, polyether ketone, or other suitable rigid thermoplastic polymers. Examples of suitable elastomeric polymers include ketone fluoroelastomers, polyvinylidene fluoride, polytetrafluoro ethylene, silicones, fluorosilicones, ethylene propylene diene monomer rubber, polyurethane, or other suitable elastomeric polymers. Additionally, co-polymers of these polymers can be used.

Filler 30 should be a material that increases thermal conductivity of polymer 28 when mixed to form polymer composite 22. Filler 30 can be, for example, graphite, graphene, boron nitride, carbon nanotubes, carbon fiber, silicon carbide, silicon nitride, metal (such as elemental copper or aluminum), or other suitable micron or nanoscale materials. Filler 30 can be comprised of more than one of these materials.

In FIG. 2, fillers 30 are in a fiber configuration and extend beyond wall 20 through second side 26. In this embodiment, second side 26 represents the interior of a tube or channel (such as tubes 14) in a heat exchanger (such as heat exchanger 10 from FIG. 1). Second side 26 of wall 20 is thus in contact with a refrigerant or liquid passing through heat exchanger 10. Fibers 30 penetrate into the channel of heat exchanger 10 and provide surface enhancement to wall 20 to promote two-phase or single-phase heat transfer. The structure of fibers 30 is a microscale structure that can be tailored to match the flow regime through heat exchanger 10 (e.g., a single-phase or two-phase flow regime).

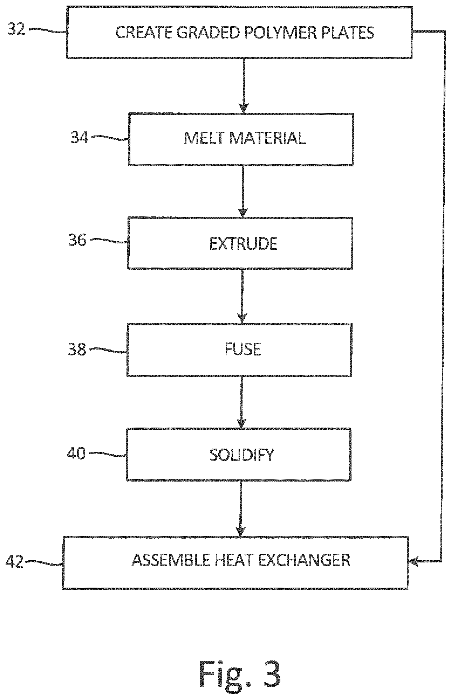

FIG. 3 is a flow chart depicting a method of making a functionally graded composite polymer heat exchanger, such as heat exchanger 10 of FIG. 1. The method includes creating functionally graded polymer composite plates (step 32) and assembling a heat exchanger (step 42).

In step 32, functionally graded polymer composite plates are created. This can be accomplished with fused filament fabrication (FFF). FFF can be used to create structural aerospace parts that are tailored in shape. In a FFF process, filaments of a material (either polymer 28 or polymer composite 22) are melted (step 34), extruded (step 36), fused together (step 38), and solidified into a part with a specific shape (step 40).

In steps 34-36, polymer material, typically in filament form, is melted so that it can then be extruded through a tube, nozzle, or other die of desired shape or cross-section. Extrusion in step 36 can use a single nozzle or a plurality of nozzles loaded with the polymer material, depending on the desired shape. If multiple nozzles are used, then each extrusion nozzle can receive a polymer material that has a different percentage of filler material. For instance, a first extrusion nozzle can receive a neat polymer material, while a second polymer material can receive a composite polymer material (containing filler). Alternatively, each nozzle can receive a composite polymer material containing fillers of different composition and concentrations. This can be tailored depending on the type of heat exchanger being made, and the specific part being formed. If the part requires lower porosity and higher mechanical strength, then the polymer material can contain less filler. In contrast, if the part requires higher thermal conductivity, the polymer material can contain more filler.

Next, in steps 38-40, the extruded polymer material is fused together into the desired shape for the functionally grade polymer composite plate, or other heat exchanger part. The fused polymer strands are then solidified together in step 40, creating a final functionally graded polymer composite plate. Grading the polymer in a perpendicular direction (radial or axial) can be tailored by using multiple extrusion nozzles at once with loading of polymer composite 22 with differing filler 30 contents or different types of fiber 30.

Alternatively, step 32 can be accomplished with other manufacturing methods such as fused filament fabrication (FFF), selective laser sintering, injection molding and its derivatives (such as reaction injection molding), and other types of extrusion or co-extrusion. Depending on the type of polymer used, different methods may be suitable. For example, FFF is suitable for thermoplastics that have a reasonable melting point (e.g., less than about 250 degrees Celsius) and solidify quickly. The heat exchanger is completed in step 42, where the grade polymer plates or parts are assembled into a heat exchanger, for example, heat exchanger 10 of FIG. 1.

A heat exchanger made from the method shown in FIG. 3 should be tailored to specific heating and cooling needs. For instance, areas of the heat exchanger through which fluid will flow can be constructed of a polymer composite with a lower filler content such that mechanical strength is higher and porosity is lower, still allowing for some thermal conductivity. In contrast, secondary surfaces in the heat exchanger where porosity is not important (for example, thin or augmented surfaces) can be made of a polymer composite with a higher filler content, and thus can have a higher thermal conductivity.

The method of FIG. 3 and the structural embodiments of FIG. 1-2 enable the use of composite polymer heat exchangers constructed with flexibility that allows for low pressure refrigerants to be used. This results in lower cost in production, lower weight heat exchangers, and heat exchanger construction that is optimized to specific heat transfer needs.

### Discussion of Possible Embodiments

The following are non-exclusive descriptions of possible embodiments of the present invention.

A heat exchanger includes a plurality of polymer tubes, each of the plurality of polymer tubes comprised of a functionally graded polymer composite, the functionally graded polymer composite comprising a polymer, and at least one filler material.

The heat exchanger of the preceding paragraph can optionally include, additionally and/or alternatively, any one or more of the following features, configurations and/or additional components:

The plurality of polymer tubes are configured to receive a first fluid flow stream.

The tubes pass through a plurality of fin plates.

The fin plates are made of a functionally graded polymer composite.

The plurality of fin plates are configured to receive a second fluid flow stream.

Each of the plurality of polymer tubes comprised of the polymer composite contains a gradient of the at least one filler material.

Each of the plurality of polymer tubes comprises a different concentration of the at least one filler material.

The polymer is selected from the group consisting of polypropylene, polyamides, polyphthalamide, polyphenylene sulfide, liquid crystal polymers, polyethylene, polyether ether ether ketone, polyether ketone, ketone fluoroelastomers, polyvinylidene fluoride, polytetrafluoro ethylene, silicones, fluorosilicones, ethylene propylene diene monomer rubber, and polyurethane.

The at least one filler material is selected from the group consisting of graphite, graphene, boron nitride, carbon nanotubes, carbon filler, silicon carbide, silicon nitride, metal, or metallic alloys.

A heat exchanger wall includes a first side, and a second side opposite the first side, wherein the first side and the second side are comprised of a polymer composite, the polymer composite functionally graded across the heat exchanger wall from the first side to the second side.

The heat exchanger wall of the preceding paragraph can optionally include, additionally and/or alternatively, any one or more of the following features, configurations and/or additional components:

The polymer composite is comprised of a polymer and at least one filler material.

The at least one filler material comprises fibers, the fibers extending beyond the first side of the wall.

The polymer composite is functionally graded from a high concentration of the at least one filler material to a low concentration of the at least one filler material.

The polymer composite is functionally graded from a high concentration of the at least one filler material at a center part of the wall to a low concentration of filler material at an exterior part of the wall.

The polymer composite is functionally graded from a low concentration of the at least one filler material at a center part of the wall to a high concentration of the at least one filler material an exterior part of the wall.

The polymer composite is functionally graded from a high concentration of the at least one filler material to a low concentration of the at least one filler material along a flow path inside the wall.

A method of making a heat exchanger includes creating functionally graded polymer plates comprising a polymer composite, and assembling the heat exchanger with the polymer plates.

The method of the preceding paragraph can optionally include, additionally and/or alternatively, any one or more of the following features, configurations and/or additional components:

Creating functionally graded polymer plates comprises the steps of melting filaments of a polymer material, extruding strands of the polymer material, fusing together the strands, and solidifying the strands of the polymer material into a part.

Extruding strands of the polymer material comprises using a plurality of extrusion nozzles loaded with the polymer material, and wherein each of the plurality of extrusion nozzles extrudes a different grade of the polymer material.

Creating functionally graded polymer plates comprises fused filament fabrication, selective laser sintering, or injection molding.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A heat exchanger comprising:
a plurality of polymer tubes (14), each of the plurality of polymer tubes comprised of a functionally graded polymer composite, the functionally graded polymer composite comprising:
a polymer; the heat exchanger being **characterized in that**
at least one filler material is dispersed in the polymer such that the concentration of the at least one filler material varies in both axial and radial directions in each of the polymer tubes.

2. The heat exchanger of claim 1, wherein the plurality of polymer tubes are configured to receive a first fluid flow stream.

3. The heat exchanger of claim 1 or 2, wherein the tubes pass through a plurality of fin plates (12).

4. The heat exchanger of claim 3, wherein the fin plates are made of a functionally graded polymer composite.

5. The heat exchanger of claim 3, wherein the plurality of fin plates are configured to receive a second fluid flow stream.

6. The heat exchanger of any preceding claim, wherein each of the plurality of polymer tubes comprised of the polymer composite contains a gradient of the at least one filler material, or wherein each of the plurality of polymer tubes comprises a different concentration of the at least one filler material.

7. The heat exchanger of any preceding claim, wherein the polymer is selected from the group consisting of polypropylene, polyamides, polyphthalamide, polyphenylene sulfide, liquid crystal polymers, polyethylene, polyether ether ether ketone, polyether ketone, ketone fluoroelastomers, polyvinylidene fluoride, polytetrafluoro ethylene, silicones, fluorosilicones, ethylene propylene diene monomer rubber, and polyurethane; and/or wherein the at least one filler material is selected from the group consisting of graphite, graphene, boron nitride, carbon nanotubes, carbon filler, silicon carbide, silicon nitride, metal, or metallic alloys.

8. A method of making a heat exchanger comprising:
creating functionally graded polymer plates comprising a polymer composite; and
assembling the heat exchanger with the polymer plates,
wherein the polymer composite comprises:
a polymer; and
at least one filler material dispersed in the polymer such that the concentration of the at least one filler material varies in both axial and radial directions in each of the polymer tubes.

9. The method of claim 8, wherein creating functionally graded polymer plates comprises the steps of:
melting filaments of a polymer material;
extruding strands of the polymer material;
fusing together the strands; and
solidifying the strands of the polymer material into a part.

10. The method of claim 9, wherein extruding strands of the polymer material comprises using a plurality of extrusion nozzles loaded with the polymer material, and wherein each of the plurality of extrusion nozzles extrudes a different grade of the polymer material.

11. The method of claim 8 or 9, wherein creating functionally graded polymer plates comprises fused filament fabrication, selective laser sintering, or injection molding.

## Patentansprüche

1. Wärmetauscher, umfassend:
eine Vielzahl von Polymerröhren (14), wobei jede der Vielzahl von Polymerröhren ein funktionell abgestuftes Verbundpolymer umfasst, wobei das funktionell abgestufte Verbundpolymer Folgendes umfasst:
ein Polymer; wobei der Wärmetauscher **dadurch gekennzeichnet ist, dass** mindestens ein Füllmaterial in dem Polymer dispergiert ist, so dass die Konzentration von dem mindestens einen Füllmaterial sowohl in axialer als auch in radialer Richtung in jeder der Polymerröhren variiert.

2. Wärmetauscher nach Anspruch 1, wobei die Vielzahl von Polymerröhren dazu konfiguriert ist, einen ersten Fluidflussstrom zu empfangen.

3. Wärmetauscher nach Anspruch 1 oder 2, wobei die Röhren durch eine Vielzahl von Lamellenplatten (12) laufen.

4. Wärmetauscher nach Anspruch 3, wobei die Lamellenplatten aus einem funktionell abgestuften Verbundpolymer hergestellt sind.

5. Wärmetauscher nach Anspruch 3, wobei die Vielzahl von Lamellenplatten dazu konfiguriert ist, einen zweiten Fluidflussstrom zu empfangen.

6. Wärmetauscher nach einem der vorstehenden Ansprüche, wobei jede der Vielzahl von Polymerröhren, welche das Verbundpolymer umfasst, einen Gradient des mindestens einen Füllmaterials enthält, oder wobei jede der Vielzahl von Polymerröhren eine unterschiedliche Konzentration des mindestens einen Füllmaterials umfasst.

7. Wärmetauscher nach einem der vorstehenden Ansprüche, wobei das Polymer ausgewählt ist aus der Gruppe bestehend aus Polypropylen, Polyamiden, Polyphthalamid, Polyphenylensulfid, Flüssigkristallpolymeren, Polyethylen, Polyetheretheretherketon, Polyetherketon, Ketonfluorelastomeren, Polyvinylidenfluorid, Polytetrafluorethylen, Silikonen, Fluorsilikonen, Ethylenpropylendienmonomer-Kautschuk und Polyurethan; und/oder wobei das mindestens eine Füllmaterial ausgewählt ist aus der Gruppe bestehend aus Graphit, Graphen, Bornitrid, Kohlenstoff-Nanoröhren, Kohlenstofffüller, Siliziumkarbid, Siliziumnitrid, Metall oder Metalllegierungen.

8. Verfahren zum Herstellen eines Wärmetauschers, Folgendes umfassend:
Erzeugen von funktionell abgestuften Polymerplatten, umfassend ein Verbundpolymer; und Zusammenbau des Wärmetauschers mit den Polymerplatten,
wobei das Verbundpolymer Folgendes umfasst:
ein Polymer; und
mindestens ein Füllmaterial, das in dem Polymer dispergiert ist, so dass die Konzentration des mindestens einen Füllmaterials sowohl in axialer als auch in radialer Richtung in jeder Polymerröhre variiert.

9. Verfahren nach Anspruch 8, wobei ein Erzeugen funktionell abgestufter Polymerplatten die folgenden Schritte umfasst:
Schmelzen von Fasern eines Polymermaterials;
Extrudieren von Strängen des Polymermaterials;
Verschmelzen der Stränge; und
Erstarren der Stränge des Polymermaterials in ein Teil.

10. Verfahren nach Anspruch 9, wobei ein Extrudieren von Strängen des Polymermaterials ein Verwenden einer Vielzahl von Extrusionsdüsen umfasst, die mit dem Polymermaterial beladen sind, und wobei jede der Vielzahl von Extrusionsdüsen eine unterschiedliche Abstufung des Polymermaterials extrudiert.

11. Verfahren nach Anspruch 8 oder 9, wobei ein Erzeugen funktionell abgestufter Polymerplatten eine Faserverschmelzungsfertigung, ein selektives Lasersintern oder ein Spritzgießen umfasst.

## Revendications

1. Échangeur de chaleur comprenant :
une pluralité de tubes polymères (14), chacun de la pluralité de tubes polymères comprenant un composite polymère à gradient fonctionnel, le composite polymère à gradient fonctionnel comprenant :
un polymère ; l'échangeur de chaleur étant **caractérisé en ce qu'**au moins un matériau de remplissage est dispersé dans le polymère de sorte que la concentration de l'au moins un matériau de remplissage varie à la fois dans les directions axiale et radiale dans chacun des tubes polymères.

2. Échangeur de chaleur selon la revendication 1, dans lequel la pluralité de tubes polymères sont configurés pour recevoir un premier courant d'écoulement de fluide.

3. Échangeur de chaleur selon la revendication 1 ou 2, dans lequel les tubes traversent une pluralité de plaques à ailettes (12) .

4. Échangeur de chaleur selon la revendication 3, dans lequel les plaques à ailettes sont constituées d'un composite polymère à gradient fonctionnel.

5. Échangeur de chaleur selon la revendication 3, dans lequel la pluralité de plaques à ailettes sont configurés pour recevoir un second courant d'écoulement de fluide.

6. Échangeur de chaleur selon une quelconque revendication précédente, dans lequel chacun de la pluralité de tubes polymères constitués du composite polymère contient un gradient de l'au moins un matériau de remplissage, ou dans lequel chacun de la pluralité de tubes polymères comprend une concentration différente de l'au moins un matériau de remplissage.

7. Échangeur de chaleur selon une quelconque revendication précédente, dans lequel le polymère est choisi dans le groupe constitué du polypropylène, des polyamides, du polyphtalamide, du sulfure de polyphénylène, de polymères à cristaux liquides, du polyéthylène, du polyéther éther cétone, du polyéther cétone, des fluoroélastomères cétone, du polyfluorure de vinylidène, du polytétrafluoroéthylène, des silicones, des fluorosilicones, du caoutchouc monomère éthylène-propylène-diène et du polyuréthane ; et/ou dans lequel l'au moins un matériau de remplissage est choisi dans le groupe constitué du graphite, du graphène, du nitrure de bore, des nanotubes de carbone, de la charge de carbone, du carbure de silicium, du nitrure de silicium, du métal ou des alliages métalliques.

8. Procédé de fabrication d'un échangeur de chaleur comprenant :
la création de plaques polymères à gradient fonctionnel comprenant un composite polymère ; et
l'assemblage de l'échangeur de chaleur avec les plaques polymères,
dans lequel le composite polymère comprend :
un polymère ; et
au moins un matériau de remplissage dispersé dans le polymère de sorte que la concentration de l'au moins un matériau de remplissage varie à la fois dans les directions axiale et radiale dans chacun des tubes polymères.

9. Procédé selon la revendication 8, dans lequel la création de plaques polymères à gradient fonctionnel comprend les étapes :
de fondue de filaments d'un matériau polymère ;
d'extrusion de brins du matériau polymère ;
de fusion des brins; et
de solidification des brins du matériau polymère en une pièce.

10. Procédé selon la revendication 9, dans lequel l'extrusion de brins du matériau polymère comprend l'utilisation d'une pluralité de buses d'extrusion chargées avec le matériau polymère, et dans lequel chacune de la pluralité de buses d'extrusion extrude une qualité différente du matériau polymère.

11. Procédé selon la revendication 8 ou 9, dans lequel la création de plaques polymères à gradient fonctionnel comprend la fabrication de filaments fondus, le frittage sélectif au laser ou le moulage par injection.
